# NEUE EUROPÄISCHE PATENTSCHRIFT

(11) **EP 2 488 750 B2**
(45) Veröffentlichungstag und Bekanntmachung des Hinweises auf die Entscheidung über den Einspruch: **20.02.2019**
(45) Hinweis auf die Patenterteilung: 02.12.2015
(21) Anmeldenummer: 10709686.9
(22) Anmeldetag: 26.02.2010
(51) Int. Cl.: F03D 7/02, F16D 65/14, F16D 55/32, F16D 55/228, F03D 80/00, F16D 121/02

(54) **SCHEIBENBREMSE FÜR EINEN AZIMUTANTRIEB EINER WINDKRAFTANLAGE**
DISK BRAKE FOR AN AZIMUTH DRIVE OF A WIND TURBINE
FREIN À DISQUE POUR UN ENTRAÎNEMENT AZIMUTAL D'UNE ÉOLIENNE

(30) Priorität: 12.10.2009 DE 102009049906; 20.11.2009 DE 202009016149 U
(43) Veröffentlichungstag der Anmeldung: 22.08.2012
(73) Patentinhaber: Stromag GmbH, 59425 Unna (DE)
(72) Erfinder: BÖHM, Peter, 59423 Unna (DE); UHLING, Daniela, 59423 Unna (DE); MIKOLAJCZYK, Olaf, 59425 Unna (DE); GEOFFROY, Bruno, 58000 Nevers (FR)
(74) Vertreter: Patentanwälte Ruff, Wilhelm, Beier, Dauster & Partner mbB
(86) Internationale Anmeldenummer: PCT/EP2010/001188
(87) Internationale Veröffentlichungsnummer: WO 2011/044961

(56) Entgegenhaltungen:
- EP-A1- 1 367 285
- WO-A1-2005/083290
- DE-A1- 1 480 028
- DE-A1- 4 126 194
- DE-B1- 1 625 679
- FR-A1- 2 833 668
- FR-A1- 2 865 783

## Beschreibung

Die Erfindung betrifft eine Scheibenbremse für einen Azimutantrieb einer horizontal drehbaren Kanzel einer Windkraftanlage gemäß dem Oberbegriff des Anspruchs 1. So eine Scheibenbremse geht z.B. aus EP-A- 1 367 285 hervor.

Eine derartige Scheibenbremse ist für einen Azimutantrieb einer horizontal drehbaren Kanzel einer Windkraftanlage allgemein bekannt. Die Kanzel trägt ein Windrad. Der Azimutantrieb dient dazu, die Kanzel relativ zu einem stationären Turm der Windkraftanlage zu verdrehen und insbesondere der entsprechenden Windrichtung nachzustellen. Zur Abbremsung der Kanzel und zum sicheren Halten der Kanzel in einer gewünschten Windrichtung weist die Kanzel eine Bremsanlage auf, die eine Vielzahl von Scheibenbremsen umfasst. Die Scheibenbremsen sind über den Umfang eines der Kanzel drehfest zugeordneten Bremsscheibenringes angeordnet. Die Scheibenbremsen sind turmfest an einem Maschinenträger befestigt und über den gesamten Umfang des Bremsscheibenringes verteilt angeordnet. Der Bremsscheibenring weist einen Durchmesser auf, der in etwa dem Durchmesser eines oberen Turmabschnittes entspricht. Der Bremsscheibenring ist koaxial zur Drehachse der Kanzel relativ zum Turm ausgerichtet. Jede Scheibenbremse umgreift mit einer maulförmigen Aufnahme ihres Bremsengehäuses einen entsprechenden Abschnitt des Bremsscheibenringes zangenartig von oben und von unten. Der Bremsscheibenring ragt somit in montiertem Funktionszustand mit seinem entsprechenden Ringabschnitt horizontal durch die Aufnahme jeder Scheibenbremse hindurch. In dem Bremsengehäuse ist sowohl oberhalb des Bremsscheibenringes als auch unterhalb des Bremsscheibenringes jeweils eine Bremsbackenanordnung vorgesehen. Die Bremsbackenanordnungen wirken von oben und von unten her auf den Bremsscheibenring. Hierzu weist jede Bremsbackenanordnung einen hydraulisch betätigbaren Bremskolben sowie einen auf dem Bremskolben aufliegenden Reibbelagträger auf. Auf einer dem Bremsscheibenring zugewandten Oberfläche des Reibbelagträgers ist ein Reibbelag vorzugsweise durch Verkleben aufgebracht.

Aufgabe der Erfindung ist es, eine Scheibenbremse der eingangs genannten Art zu schaffen, die über eine lange Standzeit eine starke Bremswirkung ermöglicht.

Diese Aufgabe wird durch die Merkmale des Anspruchs 1 gelöst. Hierdurch wird durch die auf den Bremsscheibenring wirkende Kraft jeder Scheibenbremse im Bereich einer Oberseite und/oder im Bereich einer Unterseite auf jeweils wenigstens zwei voneinander getrennte Reibbelagträger übertragen, die randseitig jeweils eigenständig abgestützt sind. Hierdurch wird eine erhebliche Verschleißreduzierung erzielt. Maßgeblich für Verschleißerscheinungen bei einer Scheibenbremse für einen Azimutantrieb einer Kanzel einer Windkraftanlage sind Vibrationen in der Ebene des Bremsscheibenringes, die aufgrund des großen Durchmessers des Bremsscheibenringes und aufgrund der enormen Stellkräfte bei einer Verdrehung der Kanzel wie auch durch Wind erfolgte Belastungen der Kanzel auftreten. Zudem wird eine Reduzierung der auftretenden Flächenpressung ermöglicht und Luftspalte und andere Spielerscheinungen im Bereich der Reibbelagträger werden reduziert. Dies führt zu einer Reduzierung der Verschleißerscheinungen an den hydraulischen Bremsfunktionselementen wie Bremskolben, Kolbendichtungen und ähnlichem. Damit ist über eine lange Standzeit eine hohe Bremskraft durch jede Scheibenbremse erzielbar. Vorzugsweise sind im Bereich der oberen und/oder der unteren Bremsbackenanordnung jeweils zwei Reibbelagträger vorgesehen. Bei anderen Ausführungsformen können auch mehr als zwei Reibbelagträger im Bereich einer Bremsbackenanordnung vorgesehen sein. Zwischen den jeweils zwei benachbarten Reibbelagträgern befindet sich jeweils eine Trennanordnung, die durch wenigstens einen Stützabschnitt gebildet sein kann. Bei einer Anzahl von n-Trennanordnungen weist eine obere oder eine untere Bremsbackenanordnung demzufolge n+1 Reibbelagträger auf. Der wenigstens eine Stützabschnitt im Bereich jeder Trennanordnung schafft eine zusätzliche Abstützung für die Reibbelagträger zusätzlich zu entsprechenden Gehäuserandabschnitten des Bremsengehäuses, die die Reibbelagträger außenseitig flankieren und stützen. Die Teilung eines bekannten Reibbelagträgers in wenigstens zwei Reibbelagträger sowie die Schaffung einer zwischen jeweils zwei Reibbelagträgern vorhandenen zusätzlichen Trennanordnung ermöglicht die erhebliche Verschleißreduzierung und demzufolge eine längere Standfestigkeit und eine längere Funktion einer starken Bremswirkung durch die entsprechende Scheibenbremse.

In Ausgestaltung der Erfindung umfasst die Bremsbackenanordnung eine der Anzahl der Reibbelagträger jeder Bremsbackenanordnung entsprechende Anzahl von Bremskolben. Damit sind jeder Bremsbackenanordnung wenigstens zwei Bremskolben zugeordnet. Die wenigstens zwei Bremskolben haben zwangsläufig geringere Querschnitte als bei lediglich einem einzelnen Bremskolben. Jeder Bremskolben ist in einem entsprechend kleineren Zylinderraum des Bremsengehäuses geführt. Die mechanischen Belastungen auf die hydraulischen Funktionselemente werden hierdurch zwangsläufig reduziert. Damit sind höhere Bremsdrücke für die Scheibenbremse erzielbar.

Gemäß der Erfindung ist jeder Stützabschnitt einstückig an dem Bremsengehäuse angeformt. Bei dieser Ausgestaltung ist jeder Stützabschnitt bei der Herstellung des Bremsengehäuses mitgeformt. Dies ist besonders vorteilhaft, falls das Bremsengehäuse aus Metallguss hergestellt ist. Der wenigstens eine Stützabschnitt kann somit bereits in der Gussform, die eine entsprechende Gehäusehälfte des Bremsengehäuses schafft, vorgesehen und integriert sein.

Weiter gemäß der Erfindung trennt jeder Stützabschnitt zwei Aufnahmekammern voneinander, die jeweils eine etwa rechteckige freie Querschnittsfläche aufweisen, und in die Aufnahmekammern ist jeweils ein Reibbelagträger eingesetzt, der ebenfalls im Wesentlichen rechteckig ausgeführt ist.

In weiterer Ausgestaltung der Erfindung ist der Stützabschnitt zumindest abschnittsweise einer Randkontur des Reibbelagträgers nachgeführt.

In weiterer Ausgestaltung der Erfindung halbiert jeder Stützabschnitt einen Gehäuseabschnitt des Bremsengehäuses für jede Bremsbackenanordnung mittig. Diese Ausgestaltung ist vorteilhaft bei zwei Reibbelagträgern pro Bremsbackenanordnung. Der durch den Gehäuseabschnitt des Bremsengehäuses umschlossene und zur Aufnahme hin offene Hohlraum wird bei zwei Reibbelagträgern und einer dazwischen liegenden Trennanordnung mit wenigstens einem Stützabschnitt durch die Trennanordnung halbiert.

In weiterer Ausgestaltung der Erfindung schließt jeder Trennsteg mit einer der Aufnahme zugewandten Randkante des zugehörigen Gehäuseabschnittes bündig ab. Der Trennsteg kann sich über die gesamte Höhe des durch den Gehäuseabschnitt umschlossenen Hohlraumes erstrecken, so dass der Trennsteg zwei getrennte Hohlkammern für die Bremskolben und zugehörigen Reibbelagträger bildet. Alternativ ist es möglich, dass der Trennsteg sich nicht über die gesamte Höhe des Hohlraumes des Gehäuseabschnittes erstreckt, sondern sich lediglich in einem der Aufnahme zugewandten Bereich des Hohlraumes des Gehäuseabschnittes befindet, so dass er sich in seiner Höhe wenigstens über eine Dicke der Reibbelagträger erstreckt und diese voneinander separiert.

In weiterer Ausgestaltung der Erfindung sind jeder Reibbelagträger und jede zugeordnete Aufnahmekammer in einem einer Bremsbackenanordnung zugeordneten Gehäuseabschnitt des Bremsengehäuses derart unsymmetrisch gestaltet, dass jeder Reibbelagträger lediglich in einer einzelnen, definierten Ausrichtung in die zugehörige Aufnahmekammer einsetzbar ist. Dadurch werden Fehlmontagen der Reibbelagträger vermieden. Eine entsprechende Fehlmontage könnte auftreten, falls der Reibbelagträger nicht mit seinem aufgebrachten Reibbelag, sondern mit seiner Unterseite am Bremsscheibenring zur Anlage kommt.

In weiterer Ausgestaltung der Erfindung weist jeder Gehäuseabschnitt des Bremsengehäuses im Bereich der Reibbelagträger wenigstens eine Demontageöffnung auf. Vorzugsweise ist eine entsprechende Demontageöffnung in einer Gehäusewandung des zugehörigen Gehäuseabschnittes als zu einem Stirnrand der Gehäusewandung offener Demontageschlitz gestaltet. Der Reibbelagträger kann mittels eines geeigneten Handwerkzeuges wie eines Schraubenziehers oder ähnlichem aus der Aufnahmekammer des Gehäuseabschnittes herausgehebeit oder herausgedrückt werden, indem mit dem entsprechenden Handwerkzeug durch den Durchtrittsschlitz hindurch der entsprechende Reibbelagträger untergriffen und zur Aufnahme des Bremsengehäuses hin nach oben (unterer Gehäuseabschnitt) bzw. nach unten (oberer Gehäuseabschnitt) gedrückt wird.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Figur 1 :: zeigt in schematisch aufgeschnittener, perspektivischer Darstellung einen Ausschnitt einer Windkraftanlage im Bereich einer drehbaren Kanzel,
- Figur 2 :: in einer Draufsicht eine Ausführungsform einer erfindungsgemäßen Scheibenbremse für einen Azimutantrieb einer Kanzel nach Figur 1,
- Figur 3 :: in vergrößerter Darstellung einen Schnitt durch die Scheibenbremse nach Figur 2 endlang der Schnittlinie III-III in Figur 2,
- Figur 4a: : in weiter vergrößerter Darstellung eine schematische Draufsicht auf eine untere Hälfte eines Bremsengehäuses der Scheibenbremse nach Figur 3,
- Figur 4b :: eine weitere Darstellung ähnlich Figur 4a,
- Figur 5 :: eine Frontansicht einer unteren Gehäusehälfte des Bremsengehäuses nach Figur 4b,
- Figur 6 :: in perspektivischer Darstellung die untere Gehäusehälfte gemäß den Figuren 4b und 5, jedoch ohne Reibbelagträger und Bremskolben,
- Figur 7 :: eine weitere Gehäusehälfte, die nicht Gegenstand eines erfindungsgemäßen Ausführungsbeispiels ist, ähnlich Figur 6,
- Figur 8 :: die Gehäusehälfte nach Figur 7 in teilweise aufgeschnittener Darstellung,
- Figur 9 :: eine weitere nicht zur Erfindung gehörende Gehäusehälfte ähnlich den Figuren 6 und 7,
- Figur 10 :: eine weitere nicht zur Erfindung gehörende Gehäusehälfte ähnlich den Figuren 6 bis 9 und
- Figur 11 :: eine weitere nicht zur Erfindung gehörende Gehäusehälfte ähnlich Figur 10.

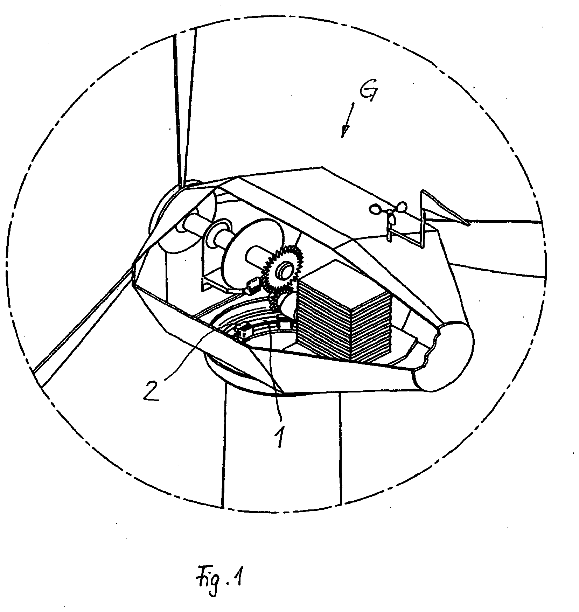

Eine Windkraftanlage weist gemäß Figur 1 einen stationär auf einem Untergrund befestigten, vertikal nach oben abragenden Turm auf, auf dem eine Kanzel G drehbar gelagert ist. Die Kanzel trägt einen Windrotor, dessen Rotation in grundsätzlich bekannter Weise zur Stromerzeugung herangeführt wird. Die Kanzel G ist auf dem Turm um eine vertikale Drehachse horizontal drehbar gelagert. Um die Kanzel G relativ zu dem Turm verstellen zu können, ist ein nicht näher dargestellter Azimutantrieb vorgesehen. Um die Kanzel G abbremsen und in einer eingestellten Windrichtung halten zu können, ist der Kanzel G ein Bremssystem zugeordnet, das nachfolgend näher beschrieben wird. Der Azimutantrieb richtet die Kanzel G entsprechend der Windrichtung aus, die für den Windrotor den bestmöglichen Wirkungsgrad gewährleistet.

Das Bremssystem weist einen Bremsscheibenring 1 und eine Vielzahl von Scheibenbremsen 2 auf, die über einen Umfang des Bremsscheibenringes 1 verteilt angeordnet sind. Der Bremsscheibenring 1 weist in etwa einen Durchmesser auf, der dem Durchmesser des Lagerungsbereiches der Kanzel G entspricht. Der Bremsscheibenring 1 ist drehfest mit der Kanzel G verbunden. Die Scheibenbremsen 2, vorzugsweise zwischen zehn und sechzehn Scheibenbremsen 2, sind an einem nicht näher dargestellten Maschinenträger über den Umfang des Bremsscheibenringes 1 verteilt befestigt. Der Maschinenträger ist im Bereich der Oberseite des Turmes stationär angeordnet und damit turmfest. Dadurch ist auch jede Scheibenbremse 2 relativ zu dem drehbaren Bremsscheibenring 1 stationär gehalten. Die Scheibenbremsen 2 sind vorzugsweise paarweise über den Umfang des Bremsscheibenringes 1 verteilt angeordnet. Bei entsprechender Betätigung der Scheibenbremsen 2 wird der Bremsscheibenring 1 abgebremst und blockiert oder für eine Verdrehung freigegeben. Die Freigabe der Drehbewegung des Bremsscheibenringes 1 führt zu einer entsprechenden Drehbeweglichkeit der Kanzel G relativ zum Turm. Alle Scheibenbremsen 2 sind identisch zueinander gestaltet. Nachfolgend werden unterschiedliche Ausführungsformen von Scheibenbremsen gemäß der Erfindung ausführlich beschrieben.

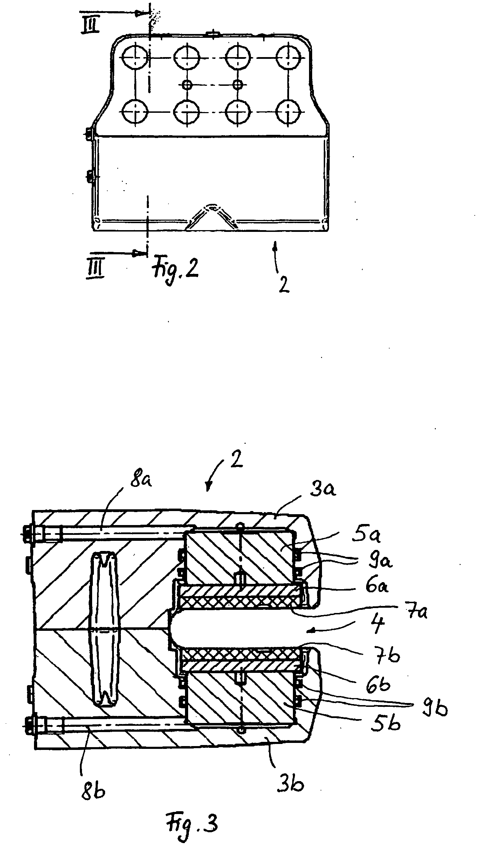

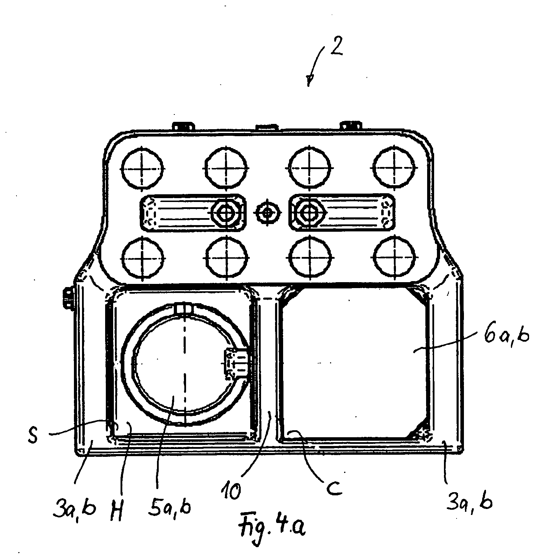

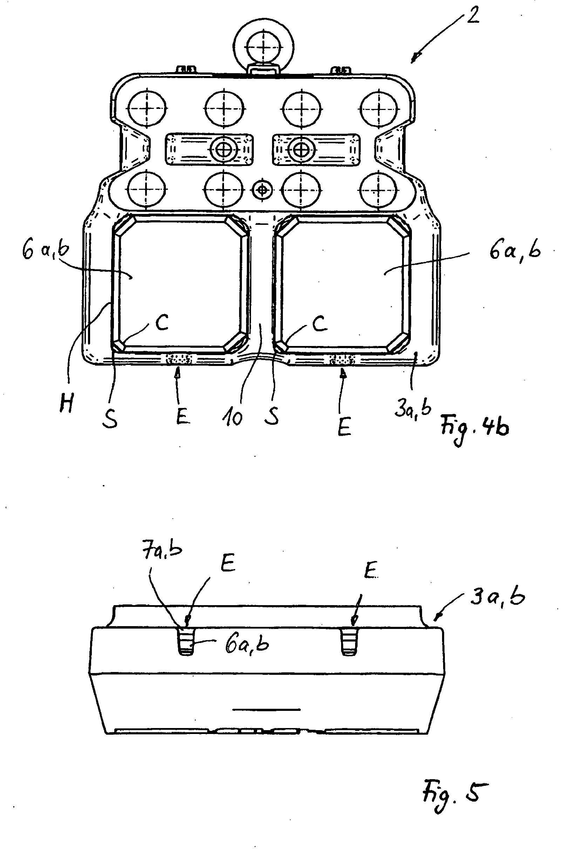

Die Scheibenbremse 2 weist ein vorzugsweise aus Metallguss hergestelltes Bremsengehäuse 3a, 3b auf, das gemäß Fig. 3 in eine obere Gehäusehälfte 3a und eine untere Gehäusehälfte 3b unterteilt ist. Die beiden Gehäusehälften 3a, 3b sind im Betriebszustand fest miteinander verbunden. Zwischen den beiden Gehäusehälften des Bremsengehäuses 3a, 3b ist eine maulartige Aufnahme 4 ausgebildet, die zu einer Seite hin offen ist. Die maulartige Aufnahme 4 dient, wie anhand der Fig. 1 erkennbar ist, dazu, den Bremsscheibenring 1 im Funktionszustand aufzunehmen. Die beiden Gehäusehälften 3a, 3b des Bremsengehäuses beherbergen identische Funktionsteile und Funktionsabschnitte der Scheibenbremse 2, die spiegelsymmetrisch zu einer Trennebene der Gehäusehälften 3a, 3b ausgerichtet sind. Damit wirken die Funktionsteile und Funktionsabschnitte der oberen Gehäusehälfte 3a von oben her auf den in der Aufnahme 4 befindlichen Bremsscheibenring. Die der unteren Gehäusehälfte 3b zugeordneten Funktionsabschnitte und -teile wirken von unten her auf den Bremsscheibenring 1. Als Funktionsteile und -abschnitte sind in der oberen Gehäusehälfte 3a des Bremsengehäuses 3a, 3b Bremskolben 5a vorgesehen, die über entsprechende Zuführkanäle 8a hydraulisch versorgt sind. Die Bremskolben 5a sind in entsprechenden Zylinderrollen der Gehäusehälfte 3a hubbeweglich gelagert. Zur Abdichtung eines nicht näher bezeichneten Druckraumes, in den der jeweilige Zuführkanal 8a mündet, sind umlaufende Dichtungen 9a vorgesehen. Die untere Gehäusehälfte 3b weist in identischer Weise zwei in Abstand nebeneinander angeordnete Bremskolben 5b auf, die in jeweils einem durch umlaufende Dichtungen 9b abgedichtetem Zylinderraum hubbeweglich gelagert sind. Der Zylinderraum wird mit Hydrauliköl beaufschlagt über jeweils einen Zuführkanal 8b. Auf der der Aufnahme 4 zugewandten Seite schließt an den Zylinderraum jedes Bremskolbens 5a, 5b innerhalb des Bremsengehäuses 3a, 3b jeweils eine viereckige Aufnahmekammer H an, wobei die beiden Aufnahmekammern H durch einen Trennsteg 10 (Fig. 4a, 4b) voneinander getrennt sind. Der Trennsteg 10 bildet eine Gehäusewand jeder Gehäusehälfte 3a, 3b des Bremsengehäuses 3a, 3b. Der Trennsteg erstreckt sich auf halber Breite jeder Gehäusehälfte 3a, 3b über die Tiefe der Aufnahme 4. Durch den Trennsteg 10 weist jede Aufnahmekammer H eine etwa rechteckige freie Querschnittsfläche auf. Jede Aufnahmekammer H schließt mit ihrer Mittellängsachse koaxial fluchtend an den jeweiligen Zylinderraum der Bremskolben 5a, 5b an. Beide Gehäusehälften 3a, 3b des Bremsengehäuses sind identisch zueinander gestaltet, so dass die Beschreibung zu Fig. 4a und 4b sowohl für die obere als auch für die untere Gehäusehälfte 3a, 3b gilt.

Eine Wandstärke des Trennsteges 10 entspricht in etwa der Wandstärke der Gehäusehälfte 3a, 3b des Bremsengehäuses an ihren Außenrändern. In die Aufnahmekammern H eingesetzt ist in jeder Gehäusehälfte 3a, 3b jeweils ein Reibbelagträger 6a, 6b, der gemäß der Darstellungen der rechten Hälfte der Fig. 4a ebenfalls im Wesentlichen rechteckig ausgeführt ist. Der Reibbelagträger 6a, 6b trägt einen in Fig. 4a nicht dargestellten Reibbelag 7a, 7b, der gleiche Grundflächenabmessungen hat.

Jede Aufnahmekammer H weist gemäß Fig. 4a und 4b als Codierung an einer Ecke eine spitze Gestaltung S und an den anderen Ecken eine Fase auf. Korrespondierend hierzu weist jeder Reibbelagträger 6a, 6b eine spitze Ecke C und drei angefasste Ecken auf.

Dadurch ist jeder Reibbelagträger 6a, 6b nur in einer einzigen Ausrichtung, in der seine Spitze C mit der spitzen Ecke S der Aufnahmekammer fluchtet, in die Aufnahmekammer H einsetzbar. Dadurch wird eine Montagesicherheit erzielt.

Anders, als es die Darstellung nach Fig. 3 vermuten lässt, sind die Reibbelagträger 6a, 6b klemmend in den Aufnahmekammern H aufgenommen, indem sie spielfrei an den umgebenden Wandungsabschnitten des Bremsengehäuses 3a, 3b anliegen. In der rechten Hälfte der Fig. 4a ist dies gut erkennbar. Jeder Reibbelagträger 6a, 6b ist somit an allen vier Seitenrändern an entsprechenden Wandungsabschnitten der zugehörigen Gehäusehälften 3a, 3b spielfrei abgestützt. Die in der Fig. 4a linke Hälfte zeigt die Aufnahmekammer H unter Weglassen des Reibbelagträgers 6a, 6b, um den Zylinderraum und den Bremskolben 5a, 5b erkennen zu können. Die Aufnahme 4 weist somit sowohl im Bereich der oberen Gehäusehälfte 3a als auch im Bereich der unteren Gehäusehälfte 3b jeweils zwei Hohlkammern für die Aufnahme entsprechender Bremskolben 5a, 5b und Reibbelagträger 6a, 6b sowie Reibbeläge 7a, 7b auf. Die beiden Bremskolben 5a, 5b einschließlich der zugeordneten Reibbelagträger 6a, 6b und Reibbeläge 7a, 7b jeder Gehäusehälfte 3a, 3b bilden gemeinsam einen oberen bzw. einen unteren Bremsbacken für die Scheibenbremse 2.

Um Reibbeläge und/oder Reibbelagträger demontieren zu können, wird entweder der zugehörige Bremskolben hydraulisch so mit Druck beaufschlagt, dass Reibbelag und Reibbelagträger in die Aufnahme gedrückt werden und entfernt werden können. Alternativ ist es gemäß Fig. 5 vorgesehen, in die Frontseite jedes Gehäuseteiles 6a, 6b Öffnungen E einzubringen, durch die ein geeignetes Werkzeug wie insbesondere ein Schraubenzieher hineingedrückt werden kann, um Reibbelagträger und Reibbelag in Richtung der Aufnahme zu bewegen und so zu lösen.

Um den Bremsscheibenring abbremsen zu können, werden die beiden oberen Bremskolben 5a und die beiden unteren Bremskolben 5b mit Druck beaufschlagt, so dass sie in Richtung zur Aufnahme 4 bewegt werden. Hierdurch werden klemmend zwischen den Wandungsabschnitten der Gehäusehälften 3a, 3b sitzenden Reibbelagträger 6a, 6b unter Überwindung der Klemmkraft in Richtung zur Aufnahme bewegt, so dass die auch als Bremsbeläge bezeichneten Reibbeläge 7a, 7b gegen die entsprechenden oberen und unteren Bremsflächen des Bremsscheibenringes 1 gepresst werden. Bei einer Belüftung der Bremskolben 5a, 5b wird die auf dem Bremsscheibenring 1 wirkende Bremskraft weggenommen. Die Bremskolben 5a, 5b und die Reibbelagträger 6a, 6b wiesen lediglich einen geringen Hubraum auf, so dass auch in belüftetem Zustand die Reibbeläge 7a, 7b nahezu spielfrei an den korrespondierenden Flächen des Bremsscheibenringes 1 anliegen. In belüfteter Ruhestellung erfolgt dieses Anliegen jedoch druckfrei, so dass auf den Bremsscheibenring 1 keine nennenswerte Bremswirkung übertragen wird.

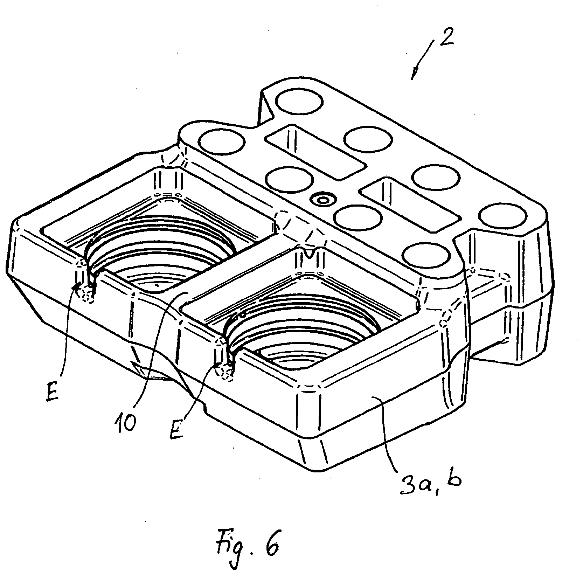

In Figur 6 ist die untere Gehäusehälfte 3b der Scheibenbremse 2 dargestellt. Die obere Gehäusehälfte 3a, die spiegelsymmetrisch auf die untere Gehäusehälfte 3b aufgesetzt und im rückwärtigen Bereich mittels mehrerer Schraubverbindungen fest mit der unteren Gehäusehälfte verbunden wird, ist identisch gestaltet zu der unteren Gehäusehälfte 3b.

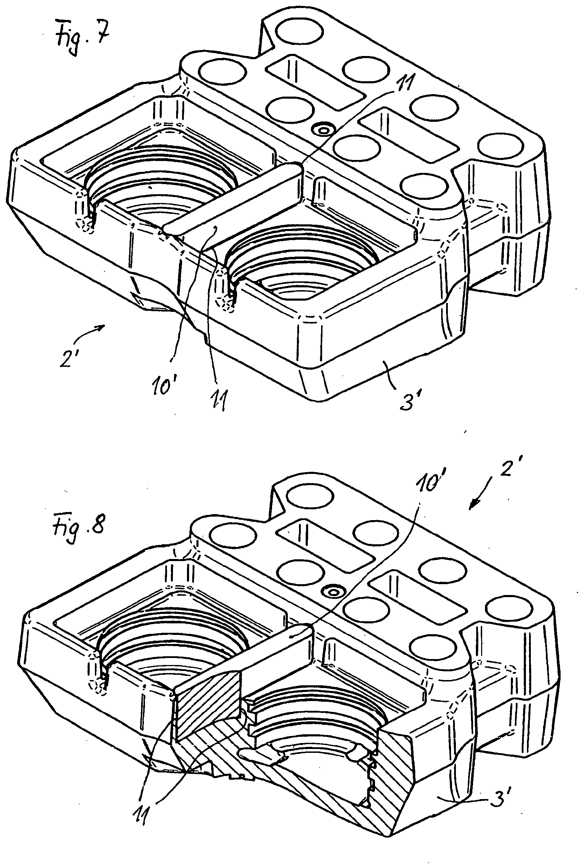

Auch bei den nachfolgenden Ausführungsformen gemäß den Figuren 7 bis 11 ist jeweils lediglich jeweils eine untere Gehäusehälfte eines Bremsengehäuses der Scheibenbremse dargestellt. Auch bei diesen Ausführungsformen ist vorgesehen, die obere Gehäusehälfte identisch zu gestalten und spiegelsymmetrisch von oben her auf die untere Gehäusehälfte aufzusetzen und fest mit dieser zu verbinden. Die Figuren 6 bis 11 zeigen lediglich die entsprechenden Gehäusehälften des jeweiligen Bremsengehäuses ohne eingesetzte Bremsfunktionsteile. Die Gehäusehälften sind aus Metallguss, vorzugsweise aus Grauguss, hergestellt.

Anhand der Figur 6 ist erkennbar, dass jede Gehäusehälfte zylindrische Aufnahmekammern für entsprechend zylindrische Bremskolben aufweist. Die oberhalb der Zylinderkammer für den jeweiligen Bremskolben befindliche Aufnahmekammer für den jeweiligen Reibbelagträger hingegen weist eine viereckige Grundfläche auf. Die Bremskolben sind über Kolbendichtungen abgedichtet in der jeweiligen Zylinderkammer gelagert. Die Reibbelagträger liegen mit ihrer Unterseite lediglich auf den Stirnflächen der Bremskolben auf. Im Bereich ihrer Oberseite sind auf den Reibbelagträgern 6a, 6b die Reibbeläge 7a, 7b aufgebracht, die in Figur 5 lediglich angedeutet sind. Das Aufbringen der Reibbeläge auf die Oberseiten der Reibbelagträger erfolgt vorzugsweise durch Verkleben. Die Demontageöffnungen E sind zum oberen Rand der Gehäusehälfte 3b hin offen, um das Hindurchführen eines Schraubenziehers und das Nachobendrücken des Schraubenziehers einschließlich einer entsprechenden Demontage des jeweiligen Reibbelagträgers zu ermöglichen. Als Stützabschnitt zwischen den benachbarten Aufnahmekammern für die Reibbelagträger ist eine Trennanordnung mit einem Stützabschnitt in Form eines Trennsteges 10 vorgesehen, der seitliche Stützflächen für die beiden Reibbelagträger bildet. Der Trennsteg 10 ist einstückiger Teil der Gehäusehälfte 3b.

Bei der nicht erfindungsgemäßen Ausführungsform nach den Figuren 7 und 8 ist die Gehäusehälfte im Wesentlichen identisch ausgeführt wie die Gehäusehälfte 3b nach Figur 6. Nachfolgend wird daher lediglich auf die Unterschiede der Ausführungsform nach den Figuren 7 und 8 eingegangen. Für die funktionsgleichen Teile und Abschnitte der Scheibenbremse 2' wird auf die zuvor ausgeführte Offenbarung verwiesen.

Wesentlicher Unterschied bei der Ausführungsform der Scheibenbremse 2' nach den Figuren 7 und 8 ist es, dass zwischen den beiden Reibbelagträgern der Bremsbackenanordnung innerhalb der dargestellten Gehäusehälfte 3' ein Stützabschnitt 10' vorgesehen ist, der einen als separates Bauteil eingesetzten Trennsteg 10' umfasst. In der Gehäusehälfte 3' ist eine entsprechende Stützaussparung 11 zwischen den beiden Zylinderkammern für die Bremskolben vorgesehen, die sich quer über die Tiefe der Aufnahmekammern für die Reibbelagträger erstreckt. Die Ausrichtung der Stützaussparung 11 ist somit quer zur Bewegungsrichtung des Bremsscheibenringes ausgerichtet. Die Stützaussparung 11 halbiert die Gehäuseaussparungen für die Reibbelagträger. Der Trennsteg 10' ist formschlüssig von oben her in die Stützaussparung 11 eingesteckt und spielfrei in dieser gehalten. Seine Höhe ist so bemessen, dass er bündig mit dem umlaufenden Rand der Gehäusehälfte 3' abschließt. Der als Stützabschnitt dienende Trennsteg 10' ist somit unabhängig von der Gehäusehälfte 3' als separates Bauteil hergestellt und nach der Fertigstellung der Gehäusehälfte 3' spielfrei von oben her in die korrespondierende Stützaussparung 11 eingesetzt. Der als Stützprofilierung dienende Trennsteg 10' kann aus einem Material hergestellt sein, das andere Materialeigenschaften aufweist als das Material der Gehäusehälfte 3'. Es ist insbesondere möglich, die Stützprofilierung 10' aus einem verschleißfesteren Material herzustellen als das Material der Gehäusehälfte 3' ist.

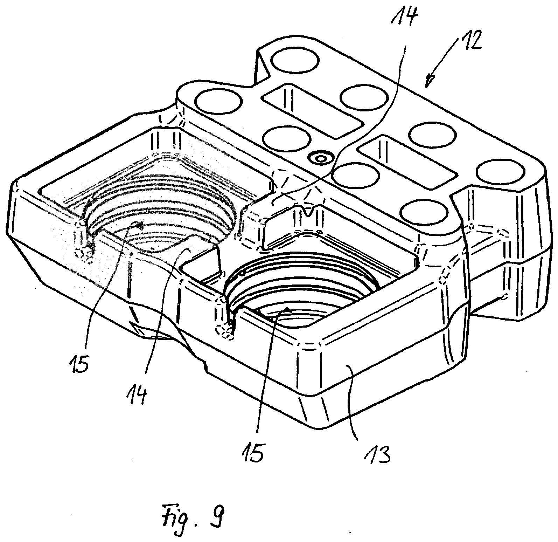

Bei der nicht erfindungsgemäßen Ausführungsform nach Figur 9 weist die Gehäusehälfte 13 der Scheibenbremse 12 zwei Stützabschnitte 14 auf, die sich von der Vorder- und von der Rückseite her zwischen die Reibbelagträger hinein erstrecken. Die Stützabschnitte 14 trennen die Aufnahmekammern 15 für die beiden Reibbelagträger voneinander. Unterhalb der Aufnahmekammern 15 für die Reibbelagträger sind analog der zuvor beschriebenen Ausführungsformen Zylinderkammern für zylindrische Bremskolben der Hydraulikfunktionseinheiten vorgesehen. Die Stützabschnitte 14 sind einstückig bei der Herstellung der Gehäusehälfte 13 mit ausgeformt und sind auf einander zugewandt. Zwischen den beiden Stützabschnitten 14 verbleibt ein Freiraum und damit ein Abstand, dessen Länge etwa der Länge jedes Stützabschnittes 14 entspricht. Die Stützabschnitte 14 sind stegförmig gestaltet und schließen mit ihrer Oberseite bündig mit einem umlaufenden Rand der Gehäusehälfte 13 ab. Die Aufnahmekammern 15 sind mit viereckigen Grundflächen versehen. Demzufolge sind auch die Stützabschnitte 14 gemäß Figur 9 quaderförmig ausgeführt.

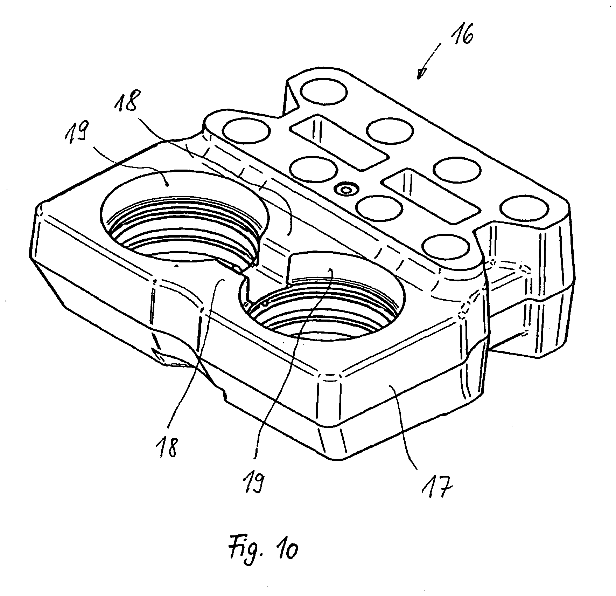

Bei der nicht erfindungsgemäßen Ausführungsform nach Figur 10 sind zylindrische Aufnahmekammern 19 für Reibbelagträger vorgesehen, die korrespondierend kreisscheibenförmige Grundflächen aufweisen. Zwischen den benachbarten Aufnahmekammern 19 erstrecken sich analog der Ausführungsform nach Figur 9 zwei Stützabschnitte 18 von der Vorderseite bzw. von der Rückseite hin zur Mitte, um eine Führung und Stützung der Reibbelagträger im mittleren Bereich der Gehäusehälfte 17 zu ermöglichen. Die Stützabschnitte 18 sind einstückiger Teil der Gehäusehälfte 17 und gemeinsam mit der Gehäusehälfte 17 hergestellt. Die Gehäusehälfte 17 ist Teil einer Scheibenbremse 16.

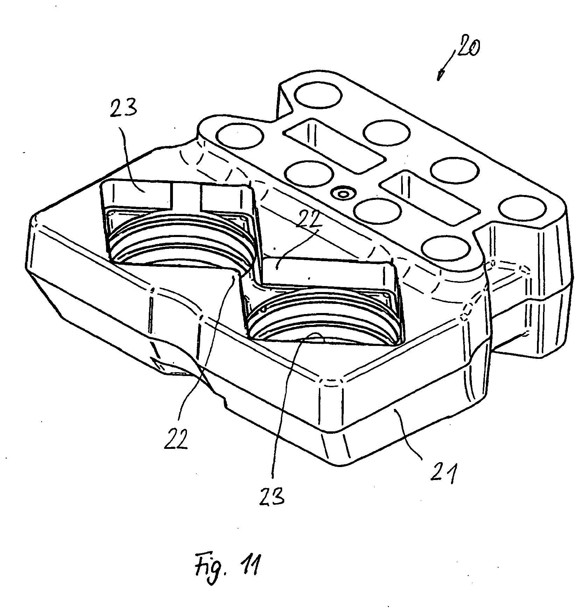

Bei der nicht erfindungsgemäßen Ausführungsform nach Figur 11 weist eine Scheibenbremse 20 eine Gehäusehälfte 21 auf, die im Wesentlichen wie die zuvor beschriebenen Ausführungsformen nach den Figuren 9 und 10 gestaltet ist. Wesentlicher Unterschied bei der Ausführungsform nach Figur 11 ist es, dass die Gehäusehälfte 21 zwei Aufnahmekammern 23 aufweist, die in ihrer Grundfläche rautenförmig zueinander benachbart sind. Im mittleren Bereich der Gehäusehälfte 21 zwischen den beiden Aufnahmekammern 23 ergeben sich hierdurch Stützabschnitte 22 mit dreieckiger Grundfläche 22. Auch die Stützabschnitte 22 sind einstückiger Teil der Gehäusehälfte 21. Die nicht dargestellten Reibbelagträger sind auf die viereckigen, vorliegend rautenförmig in die Gehäusehälfte 21 positionierten Aufnahmekammern 23 abgestimmt, indem sie - wie auch die zuvor beschriebenen Ausführungsformen - im wesentlichen spielfrei bündig in die Aufnahmekammern 23 der Gehäusehälfte 21 eingesetzt werden.

## Patentansprüche

1. Scheibenbremse für einen Azimutantrieb einer horizontal drehbaren Kanzel (G) einer Windkraftanlage mit einem Bremsengehäuse (3a, 3b), das eine maulförmige Aufnahme für einen abzubremsenden Scheibenring (1) umfasst, wobei der Aufnahme eine obere, hubbewegliche Bremsbackenanordnung und/oder eine untere, entgegengesetzt hubbewegliche Bremsbackenanordnung zugeordnet ist, die jeweils wenigstens einen, zur Aufnahme gerichteten Reibbelagträger (6a, 6b) aufweisen, wobei die obere und/oder die untere Bremsbackenanordnung mehrere benachbart zueinander angeordnete Reibbelagträger (6a, 6b) aufweisen, und wobei gehäusefest wenigstens ein Stützabschnitt (10) vorgesehen ist, der zumindest abschnittsweise zwischen zwei benachbarte Reibbelagträger (6a, 6b) hineinragt, **dadurch gekennzeichnet, dass** jeder Stützabschnitt (10) einstückig an dem Bremsengehäuse (3a, 3b) angeformt ist, und zwei Aufnahmekammern (H) voneinander trennt, die jeweils eine etwa rechteckige freie Querschnittsfläche aufweisen, und dass in die Aufnahmekammern (H) jeweils ein Reibbelagträger (6a, 6b) eingesetzt ist, der ebenfalls im Wesentlichen rechteckig ausgeführt ist.

2. Scheibenbremse nach Anspruch 1, **dadurch gekennzeichnet, dass** wenigstens eine Bremsbackenanordnung eine der Anzahl von Reibbelagträgern (6a, 6b) entsprechende Anzahl von Bremskolben (5a, 5b) umfasst.

3. Scheibenbremse nach Anspruch 1 oder 2, **dadurch gekennzeichnet, dass** der Stützabschnitt (10) zumindest abschnittsweise den Randkonturen der benachbarten Reibbelagträger (6a, 6b) nachgeführt ist.

4. Scheibenbremse nach Anspruch 1, **dadurch gekennzeichnet, dass** jeder Stützabschnitt (10) einen Gehäuseabschnitt des Bremsengehäuses (3a, 3b) für jede Bremsbackenanordnung mittig halbiert.

5. Scheibenbremse nach Anspruch 4, **dadurch gekennzeichnet, dass** jeder Stützabschnitt (10) mit einer der Aufnahme (4) zugewandten Randkante des zugehörigen Gehäuseabschnittes (3a, 3b) bündig abschließt.

6. Scheibenbremse nach einem der vorhergehenden Ansprüche, **dadurch gekennzeichnet, dass** jeder Reibbelagträger (6a, 6b) und jede zugeordnete Aufnahmekammer (H) in einem einer Bremsbackenanordnung zugeordneten Gehäuseabschnitt des Bremsengehäuses (3, 3b) derart unsymmetrisch gestaltet sind, dass jeder Reibbelagträger lediglich in einer einzelnen, definierten Ausrichtung in die zugehörige Aufnahmekammer (H) einsetzbar ist.

7. Scheibenbremse nach einem der vorhergehenden Ansprüche, dass jeder Gehäuseabschnitt (3) des Bremsengehäuses (3, 3b) im Bereich der Reibbelagträger (6a, 6b) eine Demontageöffnung (E) aufweist.

## Claims

1. A disk brake for an azimuth drive of a horizontally rotatable nacelle (G) of a wind turbine having a brake housing (3a, 3b) which comprises a mouth-shaped receptacle for a disk ring (1) to be braked, the receptacle being assigned an upper brake shoe arrangement which can be moved up and down and/or a lower brake shoe arrangement which can be moved up and down in the opposite direction, which brake shoe arrangements in each case have at least one friction lining carrier (6a, 6b) which is directed toward the receptacle, the upper and/or the lower brake shoe arrangement having a plurality of friction lining carriers (6a, 6b) which are arranged adjacently to one another, and having at least one supporting section (10) provided fixed to the housing which projects at least in sections between two adjacent friction lining carriers (6a, 6b), **characterized in that** each supporting section (10) is formed integrally on the brake housing (3a, 3b), and separates two receiving chambers (H) from one another, the chambers each having an approximately rectangular free cross-sectional area, and **in that** in each case one friction lining carrier (6a, 6b) is inserted into the receiving chambers (H), which friction lining carrier is likewise of substantially rectangular configuration.

2. The disk brake as claimed in claim 1, **characterized in that** at least one brake shoe arrangement comprises a number of brake pistons (5a, 5b) corresponding to the number of friction lining carriers (6a, 6b).

3. The disk brake as claimed in claim 1 or 2, **characterized in that** the supporting section (10) is tracked at least in sections with respect to the edge contours of the adjacent friction lining carriers (6a, 6b).

4. The disk brake as claimed in claim 1, **characterized in that** each supporting section (10) centrally halves a housing section of the brake housing (3a, 3b) for each brake shoe arrangement.

5. The disk brake as claimed in claim 4, **characterized in that** each supporting section (10) terminates flushly with an outer edge of the associated housing section (3a, 3b), which outer edge faces the receptacle (4).

6. The disk brake as claimed in one of the preceding claims, **characterized in that** each friction lining carrier (6a, 6b) and each associated receiving chamber (H) are designed asymmetrically in a housing section of the brake housing (3, 3b), which housing section is assigned to a brake shoe arrangement, in such a way that each friction lining carrier can be inserted only in a single, defined orientation into the associated receiving chamber (H).

7. The disk brake as claimed in one of the preceding claims, **characterized in that** each housing section (3) of the brake housing (3, 3b) has a dismantling opening (E) in the region of the friction lining carriers (6a, 6b).

## Revendications

1. Frein à disque pour un entraînement azimutal d'un poste (G) pouvant tourner horizontalement d'une centrale éolienne, comprenant un boîtier de frein (3a, 3b) qui comprend un logement en forme de bouche pour un anneau de disque à freiner (1), au logement étant associés un agencement de mâchoire de frein supérieur, à course de déplacement, et/ou un agencement de mâchoire de frein inférieur, à course de déplacement opposée, lesquels présentent chacun au moins un support de garniture de friction (6a, 6b) orienté vers le logement, l'agencement de mâchoire de frein supérieur et/ou l'agencement de mâchoire de frein inférieur présentant plusieurs supports de garniture de friction (6a, 6b) disposés les uns à côté des autres, et au moins une portion de support (10) étant prévue fixement sur le boîtier, laquelle pénètre au moins en partie entre deux supports de garniture de friction adjacents (6a, 6b), **caractérisé en ce que** chaque portion de support (10) est façonnée d'une seule pièce sur le boîtier de frein (3a, 3b), et sépare deux chambres de réception (H) l'une de l'autre, chacune des chambres présentant une section transversale libre approximativement rectangulaire, et **en ce qu'**un support de garniture de friction (6a, 6b) est placé dans chacune des chambres de réception (H), ledit support également présentant une configuration essentiellement rectangulaire.

2. Frein à disque selon la revendication 1, **caractérisé en ce qu'**au moins un agencement de mâchoire de frein comprend un nombre de pistons de frein (5a, 5b) correspondant au nombre de supports de garniture de friction (6a, 6b).

3. Frein à disque selon la revendication 1 ou 2, **caractérisé en ce que** la portion de support (10) suit au moins en partie les contours de bord des supports de garniture de friction adjacents (6a, 6b).

4. Frein à disque selon la revendication 1, **caractérisé en ce que** chaque portion de support (10) divise en deux au milieu une portion de boîtier du boîtier de frein (3a, 3b) pour chaque agencement de mâchoire de frein.

5. Frein à disque selon la revendication 4, **caractérisé en ce que** chaque portion de support (10) se termine en affleurement avec une arête de bord de la portion de boîtier associée (3a, 3b) tournée vers le logement (4).

6. Frein à disque selon l'une quelconque des revendications précédentes, **caractérisé en ce que** chaque support de garniture de friction (6a, 6b) et chaque chambre de réception associée (H) sont configurés de manière asymétrique dans une portion de boîtier du boîtier de frein (3, 3b) associée à un agencement de mâchoire de frein, de telle sorte que chaque support de garniture de friction puisse être inséré uniquement dans une seule orientation définie dans la chambre de réception associée (H).

7. Frein à disque selon l'une quelconque des revendications précédentes, **caractérisé en ce que** chaque portion de boîtier (3) du boîtier de frein (3, 3b) présente dans la région des supports de garniture de friction (6a, 6b) une ouverture de démontage (E).
